# EUROPÄISCHE PATENTANMELDUNG

(11) **EP 1 738 951 A2**
(43) Veröffentlichungstag der Anmeldung: **03.01.2007**
(21) Anmeldenummer: 06011741.3
(22) Anmeldetag: 07.06.2006
(51) Int. Cl.: B60K 17/02

(54) **Drehmomentübertragungseinrichtung**

(30) Priorität: 01.07.2005 DE 102005030729
(71) Anmelder: LuK Lamellen und Kupplungsbau Beteiligungs KG, 77815 Bühl (DE)
(72) Erfinder: Nöhl, Oliver, 77830 Bühlertal (DE); Agner, Ivo, 77815 Bühl (DE)

(57) **Zusammenfassung**

Die Erfindung betrifft eine Drehmomentübertragungseinrichtung im Antriebsstrang eines Kraftfahrzeugs zur Drehmomentübertragung zwischen einer Antriebseinheit (3), insbesondere einer Brennkraftmaschine, mit einer Abtriebswelle (4), insbesondere einer Kurbelwelle, und einem Getriebe (5) mit mindestens einer Getriebeeingangswelle (31,42), und mit mindestens einer Kupplungseinrichtung (6), die einen Kupplungsgehäuseabschnitt (55), insbesondere einen Kupplungsdeckel, aufweist, der sich an einem Getriebegehäuseabschnitt (58) abstützt.

Um die Lebensdauer der Drehmomentübertragungseinrichtung zu erhöhen, ist der Kupplungsgehäuseabschnitt (55) in radialer Richtung so gegen den Getriebegehäuseabschnitt (58) elastisch vorgespannt ist, dass sich die Vorspannung im Betrieb maximal auf Null reduziert.

## Beschreibung

Die Erfindung betrifft eine Drehmomentübertragungseinrichtung im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und einem Getriebe mit mindestens einer Getriebeeingangswelle, und mit mindestens einer Kupplungseinrichtung, die einen Kupplungsgehäuseabschnitt, insbesondere einen Kupplungsdeckel, aufweist, der sich an einem Getriebegehäuseabschnitt abstützt.

Aufgabe der Erfindung ist es, eine einfach aufgebaute und kostengünstig herstellbare Drehmomentübertragungseinrichtung gemäß dem Oberbegriff des Anspruchs 1 zu schaffen, die eine höhere Lebensdauer aufweist als herkömmliche Drehmomentübertragungseinrichtungen.

Die Aufgabe ist bei einer Drehmomentübertragungseinrichtung im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und einem Getriebe mit mindestens einer Getriebeeingangswelle, und mit mindestens einer Kupplungseinrichtung, die einen Kupplungsgehäuseabschnitt, insbesondere einen Kupplungsdeckel, aufweist, der sich an einem Getriebegehäuseabschnitt abstützt, dadurch gelöst, dass der Kupplungsgehäuseabschnitt in radialer Richtung so gegen den Getriebegehäuseabschnitt elastisch vorgespannt ist, dass sich die Vorspannung im Betrieb maximal auf Null reduziert. Wenn der Kupplungsgehäuseabschnitt zum Beispiel zur Lagerung oder Abstützung einer Kupplungseinrichtung verwendet wird, dann können im Betrieb der Kupplungseinrichtung unerwünscht hohe Biegeschwingungen auftreten, wie im Rahmen der vorliegenden Erfindung herausgefunden wurde. Das wurde im Rahmen der vorliegenden Erfindung darauf zurückgeführt, dass der Kupplungsgehäuseabschnitt und der Getriebegehäuseabschnitt aus unterschiedlichen Materialien gebildet sind, die unterschiedliche Wärmeausdehnungskoeffizienten aufweisen. Die unterschiedlichen Wärmeausdehnungskoeffizienten können dazu führen, dass bei einer Erwärmung des Getriebes zwischen dem zum Beispiel aus Aluminium gebildeten Getriebegehäuseabschnitt und dem zum Beispiel aus Stahl gebildeten Kupplungsgehäuseabschnitt ein unerwünschtes Spiel auftritt. Die elastische radiale Verspannung der Gehäuseabschnitte gegeneinander dient dazu, unterschiedliche Ausdehnungen der Gehäuseabschnitte bei Temperaturschwankungen auszugleichen. Dadurch wird das Auftreten eines unerwünschten Spiels zwischen den Gehäuseabschnitten verhindert. Das wiederum führt dazu, dass das Auftreten von unwuchtbedingten Biegeschwingungen, welche sich negativ auf die Lebensdauer der Drehmomentübertragungseinrichtung auswirken könnten, deutlich reduziert werden kann. Vorzugsweise wird die Vorspannung bei der Montage so gewählt, dass beim Erreichen der Betriebswärme noch eine geringe Restvorspannung vorhanden ist.

Ein bevorzugtes Ausführungsbeispiel der Drehmomentübertragungseinrichtung ist dadurch gekennzeichnet, dass zwischen die Abtriebswelle der Antriebseinheit und die Getriebeeingangswelle eine Schwingungsdämpfungseinrichtung geschaltet ist, die mindestens ein Eingangsteil und ein Ausgangsteil aufweist, das mit Hilfe einer Lagereinrichtung in radialer Richtung an dem Kupplungsgehäuseabschnitt gelagert beziehungsweise abgestützt ist. Vorzugsweise ist das Ausgangsteil der Schwingungsdämpfungseinrichtung sowohl in radialer als auch in axialer Richtung, zumindest indirekt, an dem Kupplungsgehäuseabschnitt gelagert beziehungsweise abgestützt. Bei der Schwingungsdämpfungseinrichtung handelt es sich vorzugsweise um ein Zweimassenschwungrad. Durch die Lagereinrichtung können herkömmliche Lagereinrichtungen zwischen dem Ausgangsteil der Schwingungsdämpfungseinrichtung und der Getriebeeingangswelle oder der Abtriebswelle entfallen.

Ein weiteres bevorzugtes Ausführungsbeispiel der Drehmomentübertragungseinrichtung ist dadurch gekennzeichnet, dass der Kupplungsgehäuseabschnitt radial außen einen Verformungsbereich aufweist, der in radialer Richtung elastisch verformbar ist. Vorzugsweise ist der Kupplungsgehäuseabschnitt in axialer Richtung relativ steif ausgebildet, um die Aufnahme von Axialkräften, zum Beispiel von Kupplungsbetätigungskräften, zu ermöglichen. Der in radialer Richtung wirksame Verformungsbereich dient dazu, die im Betrieb auftretende Differenzwärmeausdehnung der Gehäuseabschnitte zu kompensieren und ein unerwünschtes Radialspiel zwischen den Gehäuseabschnitten zu vermeiden.

Ein weiteres bevorzugtes Ausführungsbeispiel der Drehmomentübertragungseinrichtung ist dadurch gekennzeichnet, dass der Kupplungsgehäuseabschnitt in dem Verformungsbereich einen im Wesentlichen U-förmigen Querschnitt mit einer Basis aufweist, die im Wesentlichen in radialer Richtung verläuft und von der zwei Schenkel ausgehen, von denen einer an dem Getriebegehäuseabschnitt anliegt. Vorzugsweise ist der U-förmige Querschnitt zu der Schwingungsdämpfungseinrichtung hin geöffnet. Der Verformungsbereich bildet eine zweischenklige, umlaufende Biegefeder.

Ein weiteres bevorzugtes Ausführungsbeispiel der Drehmomentübertragungseinrichtung ist dadurch gekennzeichnet, dass der Bereich zwischen den Schenkeln des U-förmigen Querschnitts, zumindest teilweise, mit einem elastischen, schwingungsdämpfenden Material ausgefüllt ist. Dadurch kann die Geräuschabstrahlung des Kupplungsgehäuseabschnitts reduziert werden.

Ein weiteres bevorzugtes Ausführungsbeispiel der Drehmomentübertragungseinrichtung ist dadurch gekennzeichnet, dass der Kupplungsgehäuseabschnitt radial außen einen radial nach außen abstehenden Kragen aufweist. Der Kragen dient dazu, den Kupplungsgehäuseabschnitt in axialer Richtung zu fixieren. Vorzugsweise ist der Kragen zwischen einem Absatz des Getriebegehäuseabschnitts und einem axialen Sicherungselement, zum Beispiel einem Sprengring, angeordnet.

Ein weiteres bevorzugtes Ausführungsbeispiel der Drehmomentübertragungseinrichtung ist dadurch gekennzeichnet, dass an dem Kragen ein Absatz ausgebildet ist, der an dem Getriebegehäuseabschnitt anliegt. Der Absatz dient zum Beispiel dazu, einen Dichtring zu zentrieren. Des Weiteren kann der Absatz beim Einspressen des Kupplungsgehäuseabschnitts in den Getriebegehäuseabschnitt als Montageanschlag dienen.

Ein weiteres bevorzugtes Ausführungsbeispiel der Drehmomentübertragungseinrichtung ist dadurch gekennzeichnet, dass zwischen dem Kragen und dem Getriebegehäuseabschnitt ein Dichtelement angeordnet ist. Der vorab beschriebene Absatz bildet vorzugsweise einen Anschlag, der die Verpressung des Dichtrings in axialer Richtung begrenzt. Durch den Absatz wird ein Ringraum geschaffen, der zur Aufnahme des Dichtelements dient.

Ein weiteres bevorzugtes Ausführungsbeispiel der Drehmomentübertragungseinrichtung ist dadurch gekennzeichnet, dass der Kupplungsgehäuseabschnitt radial außen teilweise konisch ausgebildet ist. Dadurch wird das elastische Vorspannen beim Einbau des Kupplungsgehäuseabschnitts in das das radial kleinere Getriebegehäuse vereinfacht.

Die Erfindung betrifft auch einen Antriebsstrang eines Kraftfahrzeugs mit einer vorab beschriebenen Drehmomentübertragungseinrichtung.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine erfindungsgemäße Drehmomentübertragungseinrichtung gemäß einem ersten Ausführungsbeispiel im Halbschnitt;
- Figur 2: eine vergrößerte Darstellung eines Ausschnitts aus Figur 1;
- Figur 3: eine ähnliche Darstellung wie in Figur 2 gemäß einem weiteren Ausführungs-beispiel und

Figur 4 eine erfindungsgemäße Drehmomentübertragungseinrichtung gemäß einem weiteren Ausführungsbeispiel im Halbschnitt.

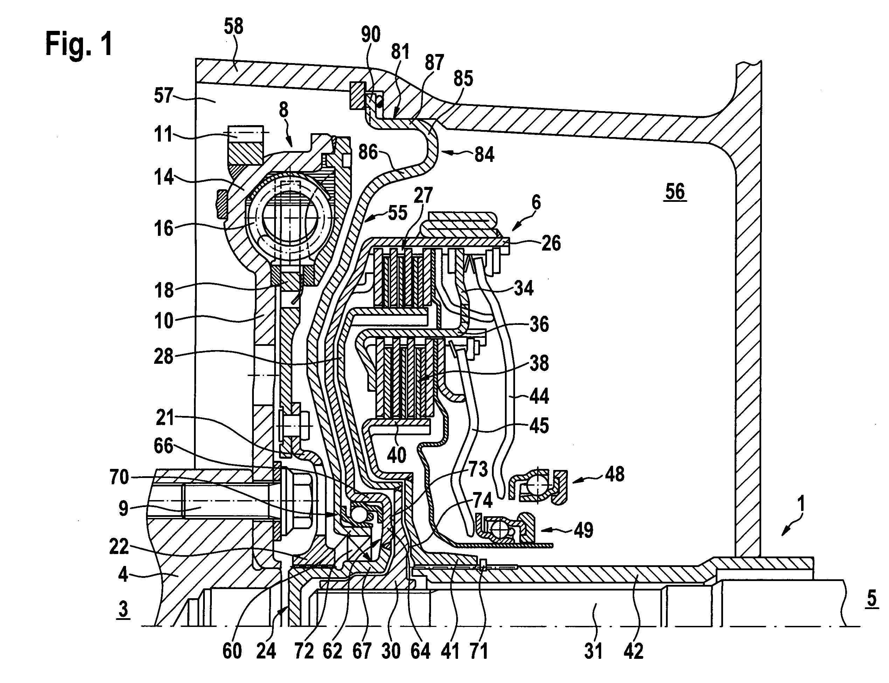

In Figur 1 ist ein Teil eines Antriebsstrangs 1 eines Kraftfahrzeugs dargestellt. Zwischen einer Antriebseinheit 3, insbesondere einer Brennkraftmaschine, von der eine Kurbelwelle 4 ausgeht, und einem Getriebe 5 ist eine nasslaufende Doppelkupplung 6 in Lamellenbauweise angeordnet. Zwischen die Antriebseinheit 3 und die Doppelkupplung 6 ist eine Schwingungsdämpfungseinrichtung 8 geschaltet. Bei der Schwingungsdämpfungseinrichtung 8 handelt es sich um ein Zweimassenschwungrad.

Die Kurbelwelle 4 der Brennkraftmaschine 3 ist über eine Schraubverbindung 9 fest mit einem Eingangsteil 10 der Schwingungsdämpfungseinrichtung 8 verbunden. Das Eingangsteil 10 der Schwingungsdämpfungseinrichtung 8 hat im Wesentlichen die Gestalt einer sich in radialer Richtung erstreckenden Kreisringscheibe, an die radial außen ein Anlasserzahnkranz 11 angeschweißt ist. Außerdem ist an dem Eingangsteil 10 der Schwingungsdämpfungseinrichtung 8 radial außen ein Schwingungsdämpferkäfig 14 befestigt, in dem mehrere Energiespeichereinrichtungen, insbesondere Federeinrichtungen 16, zumindest teilweise aufgenommen sind. In die Federeinrichtungen 16 greift ein Ausgangsteil 18 der Schwingungsdämpfungseinrichtung 8 ein.

Das Ausgangsteil 18 der Schwingungsdämpfungseinrichtung 8 ist über ein Verbindungsteil 21 mit einem integrierten Nabenteil 22 drehfest mit einem Eingangsteil 24 der Doppelkupplung 6 verbunden. Das Nabenteil 22 stützt sich in radialer Richtung auf dem Eingangsteil 24 der Doppelkupplung 6 ab. Das Kupplungseingangsteil 24 ist einstückig mit einem Außenlamellenträger 26 einer ersten Lamellen-Kupplungsanordnung 27 verbunden. Radial innerhalb des Außenlamellenträgers 26 ist ein Innenlamellenträger 28 der ersten Lamellen-Kupplungsanordnung 27 angeordnet. Der Innenlamellenträger 28 ist radial innen an einem Nabenteil 30 befestigt, das über eine Verzahnung drehfest mit einer ersten Getriebeeingangswelle 31 verbunden ist.

Das Kupplungseingangsteil 24 beziehungsweise der einstückig mit diesem verbundene Außenlamellenträger 26 beziehungsweise der durch Schweißen mit diesem verbundene Außenlamellenträger 26 der ersten Lamellenkupplungsanordnung 27 ist über ein Kopplungsteil 34 drehfest mit einem Außenlamellenträger 36 einer zweiten Lamellen-Kupplungsanordnung 38 verbunden. Radial innerhalb des Außenlamellenträgers 36 ist ein Innenlamellenträger 40 der zweiten Lamellen-Kupplungsanordnung 38 angeordnet, der radial innen fest mit einem Nabenteil 41 verbunden ist. Das Nabenteil 41 ist über eine Verzahnung drehfest mit einer zweiten Getriebeeingangswelle 42 verbunden, die als Hohlwelle ausgebildet ist. In der zweiten Getriebeeingangswelle 42 ist die erste Getriebeeingangswelle 31 drehbar angeordnet.

Die beiden Lamellen-Kupplungsanordnungen 27 und 38 werden über Betätigungshebel 44 und 45 betätigt, deren radial innere Enden sich an Betätigungslagern 48, 49 abstützen. Die Betätigungslager 48, 49 werden mit Hilfe von Betätigungskolben in axialer Richtung betätigt. Die Betätigungskolben sind gegenüber den sich mit dem Kupplungseingangsteil 24 drehenden Betätigungshebeln 44, 45 feststehend angeordnet.

Zwischen dem Verbindungsteil 21 beziehungsweise dem Ausgangsteil 18 der Schwingungsdämpfungseinrichtung 8 und dem Außenlamellenträger 26 der ersten Lamellen-Kupplungsanordnung 27 ist ein Kupplungsdeckel 55 angeordnet, der radial außen unter Vorspannung an einem Getriebegehäuseabschnitt 58 anliegt. Der Kupplungsdeckel 55 trennt einen Nassraum 56, in dem die beiden Lamellen-Kupplungsanordnungen 27 und 38 angeordnet sind, von einem trockenen Aufnahmeraum 57, in dem die Schwingungsdämpfungseinrichtung 8 angeordnet ist. Der Kupplungsdeckel 55 weist radial innen ein, im Querschnitt betrachtet, im Wesentlichen L-förmiges Ende 60 auf, das in einen Ringraum 62 ragt, der von einem Abschnitt des Kupplungseingangsteils 24 gebildet wird, der einen U-förmigen Querschnitt aufweist. Der U-förmige Querschnitt des Aufnahmeraums 62 umfasst eine radial angeordnete Basis 64, von der sich zwei Schenkel 66 und 67 in axialer Richtung zur Antriebseinheit 3 hin erstrecken.

Zwischen dem Kupplungseingangsteil 24 und dem Kupplungsdeckel 55 ist ein Dünnringkugellager 70 angeordnet, das sich sowohl in radialer als auch in axialer Richtung an dem Ende 60 des Kupplungsdeckels 55 einerseits und an der Basis 64 und dem Schenkel 66 des Kupplungseingangsteils 24 andererseits abstützt. Das Dünnringkugellager 70 weist eine gegenüber der radialen Richtung verkippte Berührungsnormale auf.

Radial innerhalb und axial überlappend zu dem Dünnringkugellager 70 ist ein Radialwellendichtring 72 zwischen dem Ende 60 des Kupplungsdeckels 55 und dem Kupplungseingangsteil 24 angeordnet. Das Dünnringkugellager 70 ist vollständig in dem Nassraum 56 angeordnet, der durch den Radialwellendichtring 72 von dem Trockenraum 57 getrennt ist. Das Dünnringkugellager 70 kann sowohl auf den Kupplungsdeckel 55 als auch auf das Kupplungseingangsteil 24 vormontiert werden, vorzugsweise auf dem Kupplungsdeckel 55. Im Bereich der Lagereinrichtung sind keine zusätzlichen axialen Sicherungsringe notwendig. Eine Verschiebung der Innenlamellenträger 28 und 40 in Richtung Motor wird durch den Anschlag 73 an der Basis 64 und den Anschlag 74 an dem Nabenteil 30, die in Reihe geschaltet sind, begrenzt. Eine Verschiebung der Innenlamellenträger 28 und 40 in Richtung Getriebe wird durch den Anschlag 74 an dem Nabenteil 30 sowie dem Sicherungsring 71 an der Getriebeeingangswelle 42 begrenzt. Die in Figur 1 dargestellte Lösung ist auch für Einfachkupplungen anwendbar.

Der in radialer Richtung gegen den Getriebegehäuseabschnitt 58 vorgespannte Kupplungsdeckel 55 weist radial außen einen elastisch verformbaren Verformungsbereich 81 auf. Der Verformungsbereich 81 hat einen U-förmigen Querschnitt 84 mit einer Basis 85, von der sich zwei Schenkel 86, 87 zur Antriebseinheit 3 hin erstrecken. Der radial innere Schenkel 86 des U-förmigen Querschnitts 84 ist gegenüber der axialen Richtung leicht geneigt, so dass er zur Antriebseinheit 3 hin abfällt. Der radial äußere Schenkel 87 des U-förmigen Querschnitts 84 liegt an dem Getriebegehäuseabschnitt 58 an. Von dem freien Ende des radial äußeren Schenkels 87 des U-förmigen Querschnitts 84 ist ein radialer Kragen 90 abgewinkelt.

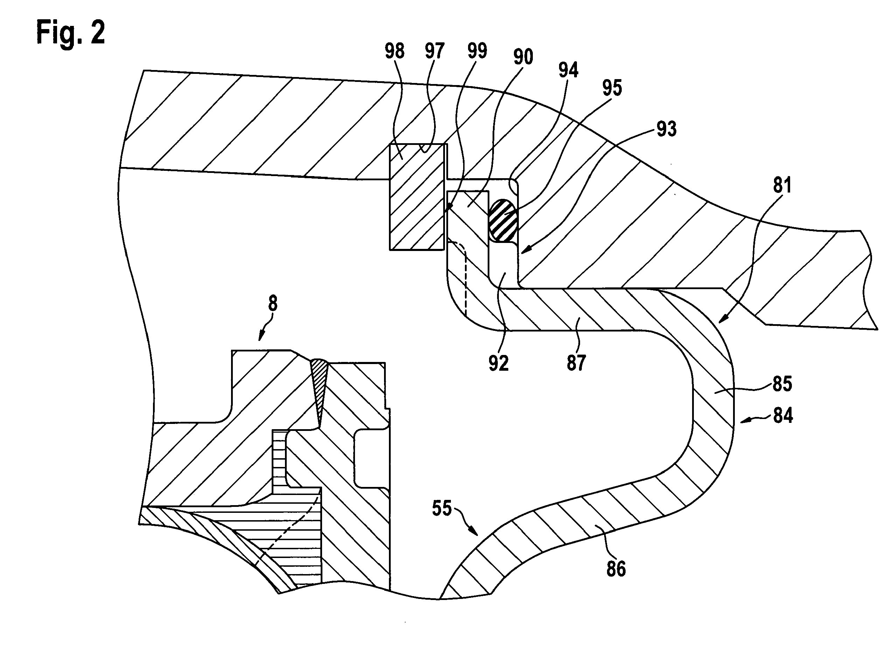

In Figur 2 ist ein Ausschnitt mit dem Verformungsbereich 81 aus Figur 1 vergrößert dargestellt. In der vergrößerten Darstellung sieht man, dass an dem Kragen 90 ein Absatz 92 ausgebildet ist, der eine Anschlagfläche 93 aufweist, die an einem Absatz 94 anliegt, der an dem Getriebegehäuseabschnitt 58 vorgesehen ist. Radial außerhalb des Absatzes 92 ist ein Ringraum vorgesehen, in dem ein O-Ring 95 aufgenommen ist. Durch den Absatz 92 wird verhindert, dass der O-Ring 95 in axialer Richtung zu stark komprimiert wird. Des Weiteren ist in dem Getriebegehäuseabschnitt 58 eine Ringnut 97 vorgesehen, in der ein Sicherungsring 98 teilweise aufgenommen ist. Der Sicherungsring 98 dient dazu, den Kupplungsdeckel 55 in axialer Richtung zur Antriebseinheit hin zu sichern und die Betätigungskräfte der Kupplungseinrichtung in das Getriebegehäuse zu leiten. Zwischen dem Sicherungsring 98 und dem Kragen 90 des Kupplungsdeckels 55 ist ein geringes Montagespiel 99 vorgesehen.

Gemäß der vorliegenden Erfindung wird der Kupplungsdeckel 55 bei der Montage so mit dem Getriebegehäuseabschnitt 58 verspannt, dass sich im Betriebszustand, wenn sich das Getriebe erwärmt, die Vorspannung auf Null reduziert beziehungsweise noch eine geringe Restvorspannung vorhanden ist. Die elastische Vorspannung wird durch die spezielle Formgebung des Kupplungsdeckels 55 in dem Verformungsbereich 81 erreicht. Der Verformungsbereich 81 ist sozusagen als zweischenklige, umlaufende Biegefeder ausgeformt. Dadurch kann eine im Betrieb auftretende Differenzwärmeausdehnung im Einspannbereich des Kupplungsdeckels kompensiert werden. Die erfindungsgemäße Gestaltung des Kupplungsdeckels 55 liefert darüber hinaus den Vorteil einer nahezu konstanten radialen Verpressung eines Dichtelements und einer Vermeidung von Radialspiel zwischen Kupplung und Getriebegehäuse. Gemäß einem weiteren Aspekt der Erfindung kann der äußere Schenkel 87 des Verformungsbereichs 81 als Einfädelphase benutzt werden. Als Sicherungsring 98 kann ein Runddrahtsprengring verwendet werden.

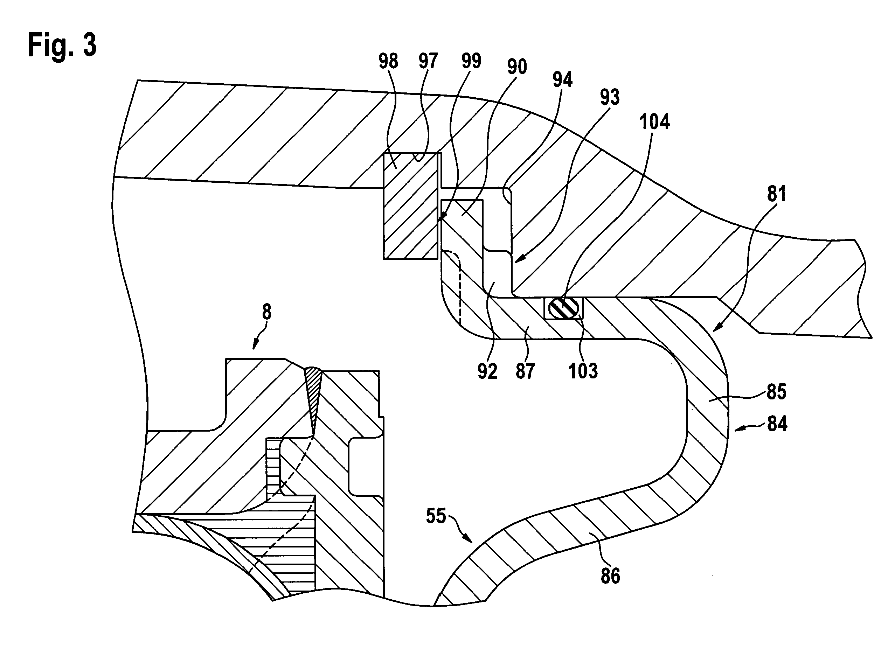

In Figur 3 ist der gleiche Ausschnitt wie in Figur 2 gemäß einem weiteren Ausführungsbeispiel dargestellt. Bei dem in Figur 3 dargestellten Ausführungsbeispiel weist der radial äußere Schenkel 87 des Verformungsbereichs 81, der auch als Einspannbereich bezeichnet wird, radial außen eine Ringnut 103 auf, in der ein O-Ring 104 aufgenommen ist. Der O-Ring 104 ist im eingebauten Zustand in radialer Richtung verpresst. Demgegenüber ist der O-Ring 95 in Figur 2 im eingebauten Zustand in axialer Richtung verpresst.

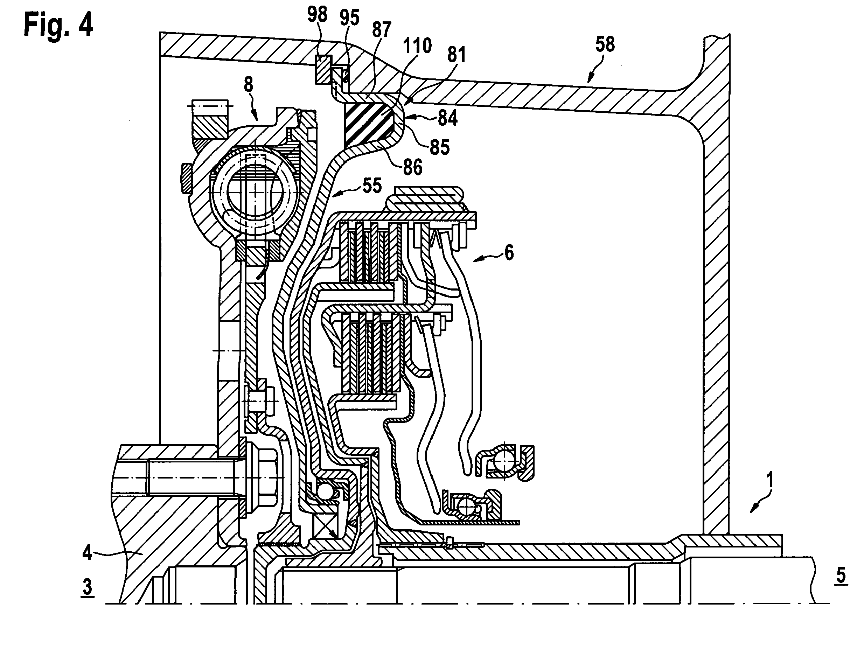

In Figur 4 ist eine ähnliche Darstellung wie in Figur 1 gezeigt. Zur Bezeichnung gleicher Teile werden die gleichen Bezugzeichen verwendet. Um Wiederholungen zu vermeiden, wird auf die Figur 1 und auf die vorangegangene Beschreibung der Figur 1 verwiesen. Im Folgenden wird nur auf die Unterschiede zwischen den Ausführungsbeispielen eingegangen.

Bei dem in Figur 4 dargestellten Ausführungsbeispiel ist der im Inneren des U-förmigen Querschnitts 84 des Verformungsbereichs 81 von der Basis 85 und den Schenkeln 86, 87 des U-förmigen Querschnitts 84 begrenzte Ringraum mit einem elastischen, schwingungsdämpfenden Material 110 gefüllt. Dadurch kann die Geräuschabstrahlung des Kupplungsdeckels reduziert werden.

### Bezugszeichenliste

- 1.: Antriebsstrang
- 3.: Antriebseinheit
- 4.: Kurbelwelle
- 5.: Getriebe
- 6.: Doppelkupplung
- 8.: Schwingungsdämpfungseinrichtung
- 9.: Schraubverbindung
- 10.: Eingangsteil von 8
- 11.: Anlasserzahnkranz
- 14.: Schwingungsdämpferkäfig
- 16.: Federeinrichtung
- 18.: Ausgangsteil von 8
- 21.: Verbindungsteil
- 22.: Nabenteil
- 24.: Kupplungseingangsteil
- 26.: Außenlamellenträger
- 27.: erste Lamellen-Kupplungsanordnung
- 28.: Innenlamellenträger
- 30.: Nabenteil
- 31.: erste Getriebeeingangswelle
- 34.: Kopplungsteil
- 36.: Außenlamellenträger
- 38.: zweite Lamellen-Kupplungsanordnung
- 40.: Innenlamellenträger
- 41.: Nabenteil
- 42.: zweite Getriebeeingangswelle
- 44.: Betätigungshebel
- 45.: Betätigungshebel
- 48.: Betätigungslager
- 49.: Betätigungslager
- 55.: Kupplungsdeckel
- 56.: Nassraum
- 57.: Aufnahmeraum
- 58.: Getriebegehäuseabschnitt
- 60.: Ende
- 62.: Aufnahmeraum mit U-förmigem Querschnitt
- 64.: Basis
- 66.: Schenkel
- 67.: Schenkel
- 70.: Dünnringkugellager
- 71.: Sicherungsring
- 72.: Radialwellendichtring
- 73.: Anschlag
- 74.: Anschlag
- 81.: Verformungsbereich
- 84.: U-förmiger Querschnitt
- 85.: Basis
- 86.: radial innerer Schenkel
- 87.: radial äußerer Schenkel
- 90.: Kragen
- 92.: Absatz
- 93.: Anschlagfläche
- 94.: Absatz
- 95.: O-Ring
- 97.: Ringnut
- 98.: Sicherungsring
- 99.: Montagespiel
- 103.: Ringnut
- 104.: O-Ring
- 110.: elastisches, schwingungsdämpfendes Material

## Patentansprüche

1. Drehmomentübertragungseinrichtung im Antriebsstrang eines Kraftfahrzeugs zur Drehmomentübertragung zwischen einer Antriebseinheit (3), insbesondere einer Brennkraftmaschine, mit einer Abtriebswelle (4), insbesondere einer Kurbelwelle, und einem Getriebe (5) mit mindestens einer Getriebeeingangswelle (31,42), und mit mindestens einer Kupplungseinrichtung (6), die einen Kupplungsgehäuseabschnitt (55), insbesondere einen Kupplungsdeckel, aufweist, der sich an einem Getriebegehäuseabschnitt (58) abstützt, **dadurch gekennzeichnet, dass** der Kupplungsgehäuseabschnitt (55) in radialer Richtung so gegen den Getriebegehäuseabschnitt (58) elastisch vorgespannt ist, dass sich die Vorspannung im Betrieb maximal auf Null reduziert.

2. Drehmomentübertragungseinrichtung nach Anspruch 1, **dadurch gekennzeichnet, dass** zwischen die Abtriebswelle (4) der Antriebseinheit (3) und die Getriebeeingangswelle (31,42) eine Schwingungsdämpfungseinrichtung (8) geschaltet ist, die mindestens ein Eingangsteil (10) und ein Ausgangsteil (18) aufweist, wobei das Ausgangsteil (18) mit Hilfe einer Lagereinrichtung (70) in radialer Richtung an dem Kupplungsgehäuseabschnitt (55) gelagert beziehungsweise abgestützt ist.

3. Drehmomentübertragungseinrichtung nach einem der vorhergehenden Ansprüche, **dadurch gekennzeichnet, dass** der Kupplungsgehäuseabschnitt (55) radial außen einen Verformungsbereich (81) aufweist, der in radialer Richtung elastisch verformbar ist.

4. Drehmomentübertragungseinrichtung nach Anspruch 3, **dadurch gekennzeichnet, dass** der Kupplungsgehäuseabschnitt (55) in dem Verformungsbereich (81) einen im Wesentlichen U-förmigen Querschnitt (84) mit einer Basis (85) aufweist, die im Wesentlichen in radialer Richtung verläuft und von der zwei Schenkel (86,87) ausgehen, von denen einer an dem Getriebegehäuseabschnitt (58) anliegt.

5. Drehmomentübertragungseinrichtung nach Anspruch 4, **dadurch gekennzeichnet, dass** der Bereich zwischen den Schenkeln (86,87) des U-förmigen Querschnitts (84), zumindest teilweise, mit einem elastischen, schwingungsdämpfenden Material (110) ausgefüllt ist.

6. Drehmomentübertragungseinrichtung nach einem der vorhergehenden Ansprüche, **dadurch gekennzeichnet, dass** der Kupplungsgehäuseabschnitt (55) radial außen einen radial nach außen abstehenden Kragen (90) aufweist.

7. Drehmomentübertragungseinrichtung nach Anspruch 6, **dadurch gekennzeichnet, dass** an dem Kragen (90) ein Absatz (92) ausgebildet ist, der an dem Getriebegehäuseabschnitt (58) anliegt.

8. Drehmomentübertragungseinrichtung nach Anspruch 7 **dadurch gekennzeichnet, dass** der Absatz (92) das Einpressen in axialer Richtung begrenzt.

9. Drehmomentübertragungseinrichtung nach Anspruch 6 oder 7, **dadurch gekennzeichnet, dass** zwischen dem Kragen (90) und dem Getriebegehäuseabschnitt (58) ein Dichtelement (95) angeordnet ist.

10. Drehmomentübertragungseinrichtung nach Anspruch 6, **dadurch gekennzeichnet, dass** zwischen dem am Getriebegehäuseabschnitt (58) und dem radial äußeren Schenkel (87) des Kupplungsgehäuseabschnitts (55) ein Dichtelement (95) radial angeordnet ist.

11. Drehmomentübertragungseinrichtung nach einem der vorhergehenden Ansprüche, **dadurch gekennzeichnet, dass** der Kupplungsgehäuseabschnitt (55) mittels einem Sicherungsring (98) beziehungsweise einem Sprengring oder Runddrahtsprengring in Richtung der Antriebseinheit gesichert ist.

12. Drehmomentübertragungseinrichtung nach einem der vorhergehenden Ansprüche, **dadurch gekennzeichnet, dass** der Kupplungsgehäuseabschnitt (55) radial außen teilweise konisch im nicht montierten Zustand ausgebildet ist.

13. Antriebsstrang eines Kraftfahrzeugs mit einer Drehmomentübertragungseinrichtung nach einem der vorhergehenden Ansprüche.
